# EUROPÄISCHE PATENTANMELDUNG

(11) **EP 4 656 530 A2**
(43) Veröffentlichungstag der Anmeldung: **03.12.2025**
(21) Anmeldenummer: 25179384.0
(22) Anmeldetag: 28.05.2025
(51) Int. Cl.: B65B 5/04, B65B 23/20, B65B 35/18

(54) **BESCHICKUNGSSTATION SOWIE VERFAHREN**

(30) Priorität: 29.05.2024 DE 102024115034
(71) Anmelder: HOMAG Automation GmbH, 09638 Lichtenberg (DE)
(72) Erfinder: BRUSKY, Stefan, 09638 Lichtenberg (DE); SCHUBERT, Maik, 09599 Freiberg (DE); HÄHNEL, Andy, 09623 Frauenstein (DE); KLEINE, Martin, 09599 Freiberg (DE)
(74) Vertreter: Hoffmann Eitle

(57) **Zusammenfassung**

Die Erfindung betrifft eine Beschickungsstation, aufweisend: eine Bereitstellungsstation (100), umfassend eine erste Bereitstellungseinrichtung (101) und eine zweite Bereitstellungseinrichtung (102), die benachbart zueinander angeordnet sind und eingerichtet sind, Werkstücke bereitzustellen, eine Förderstrecke (200) zum Zuführen eines Verpackungselements, eine Einlegestation (300), die eingerichtet ist, ein mittels der Bereitstellungsstation bereitgestelltes Werkstück in das zugeführte Verpackungselement einzubringen, wobei die erste Bereitstellungseinrichtung und die zweite Bereitstellungseinrichtung an einer Seite der Förderstrecke angeordnet sind.

## Beschreibung

### Technisches Gebiet

Die Erfindung betriff eine Beschickungsstation, mit der ein Werkstück in ein Verpackungselement eingebracht werden kann. Ferner betrifft die Erfindung ein Verfahren zum Beschicken eines Verpackungselements. Ein Werkstück, welches im genannten Verpackungselement aufgenommen wird, ist insbesondere ein plattenförmiges Werkstück, wie eine Holzplatte, ein Brett, ein Fußboden- oder Wandpaneel, ein Möbelteil oder ähnliches. Somit kann die Erfindung im Bereich der holzverarbeitenden Industrie zum Einsatz kommen.

### Stand der Technik

Beschickungsstationen zum Beschicken von vorbereitetem Verpackungsmaterial sind in verschiedenen Ausführungen bekannt. Um den Durchsatz von Beschickungsstationen zu steigern, ist es in diesem Zusammenhang bekannt, zwei nebeneinander angeordnete Fördereinrichtungen für Verpackungsmaterialien vorzusehen und diese Fördereinrichtungen von entgegengesetzten Seiten zu beschicken.

Insbesondere werden zwei Roboter an gegenüberliegenden Seiten der Fördereinrichtungen angeordnet, die beispielsweise wechselweise beschicken. Sollte eine gleichzeitige Beschickung von parallel zugeführten Verpackungsmaterialien vorgesehen sein, ist es erforderlich, die Verpackungselemente äußerst exakt auszurichten.

### Darstellung der Erfindung

Der Erfindung liegt die Aufgabe zugrunde, eine Beschickungsstation bereitzustellen, mit der bei kompakter Bauweise eine Beschickung mit gesteigerter Effizienz ermöglicht wird. Ferner wird ein entsprechendes Verfahren gefordert.

Anspruch 1 stellt eine entsprechende Beschickungsstation bereit. Weitere bevorzugte Ausführungsformen sind in den abhängigen Ansprüchen sowie nachfolgend aufgeführt.

Es wird eine Beschickungsstation bereitgestellt, die aufweist: eine Bereitstellungsstation, umfassend eine erste Bereitstellungseinrichtung und eine zweite Bereitstellungseinrichtung, die benachbart zueinander angeordnet sind und eingerichtet sind, Werkstücke bereitzustellen, eine Förderstrecke zum Zuführen eines Verpackungselements, eine Einlegestation, die eingerichtet ist, ein mittels der Bereitstellungsstation bereitgestelltes Werkstück in das zugeführte Verpackungselement einzubringen. Die erste Bereitstellungseinrichtung und die zweite Bereitstellungseinrichtung sind an einer Seite der Förderstrecke angeordnet.

Die erfindungsgemäße Beschickungsstation gewährleistet einen hohen Arbeitstakt ohne Stapelwechselzeit. Ferner wird durch die Anordnung der Bereitstellungsstation eine kompakte Bauweise der Beschickungsstation gewährleistet.

Gemäß einer bevorzugten Ausführungsform weist die Bereitstellungsstation eine Ablageeinrichtung zwischen der ersten Bereitstellungseinrichtung und der zweiten Bereitstellungseinrichtung einerseits sowie der Förderstrecke andererseits auf. Es ist insbesondere vorgesehen, dass die Ablageeinrichtung eingerichtet ist, in Richtung der Förderstrecke zu bewegen und bevorzugt die Werkstücke zu vereinzeln. Die Ablageeinrichtung kann beispielsweise als Rollenbahn ausgeführt sein.

Dabei kann die Ablageeinrichtung eine geneigte Ablagefläche zur Aufnahme eines oder mehrerer Werkstücke aufweisen. Somit können sich die Werkstücke schwerkraftbedingt in Richtung der Förderstrecke bewegen. Ein zusätzlicher Antrieb kann deshalb entfallen.

Es ist bevorzugt, dass sich die Bereitstellungsstation ausgehend von der Förderstrecke erstreckt. Somit können die Prozesse der Bereitstellungstation und der Förderstrecke gewissermaßen ineinandergreifen, sodass eine durchgängige Handhabung der Werkstücke gewährleistet wird.

Gemäß einer Ausführungsform ist zwischen der ersten Bereitstellungseinrichtung und der zweiten Bereitstellungseinrichtung ein Trennlineal angeordnet, sodass ein separates Bereitstellen in vorteilhafter Weise durchführt wird.

Die Bereitstellungsstation umfasst einen Bereitstellungsroboter, der eingerichtet ist, ein oder mehrere an der ersten Bereitstellungseinrichtung oder der zweiten Bereitstellungseinrichtung bereitgestellte Werkstücke in Richtung der Förderstrecke zu bewegen. Der Bereitstellungsroboter kann Sauggreifer aufweisen. Der Bereitstellungsroboter kann in vertikaler Richtung oberhalb des Trennlineals angebracht sein, sodass sowohl Zugriff auf Werkstücke der ersten Bereitstellungseinrichtung als auch auf Werkstücke der zweiten Bereitstellungseinrichtung gewährleistet wird.

Gemäß einer weiteren Ausführungsform ist eine Basis des Bereitstellungsroboters in Richtung der Förderstrecke bewegbar oder im Wesentlichen stationär und wobei insbesondere der Bereitstellungsroboters hängend an einem Träger der Bereitstellungsstation oder der Beschickungsstation befestigt ist.

Wenn eine Basis des Bereitstellungsroboters in Richtung der Förderstrecke gemäß der Ausführungsform im Wesentlichen stationär ist, ist es bevorzugt, das entweder die Basis fixiert ist oder einige Millimeter oder Zentimeter insbesondere zur Justage verschiebbar angeordnet ist.

Gemäß einer Ausführungsform ist es vorgesehen, dass der Bereitstellungsroboter eingerichtet ist, das aufgenommene oder die aufgenommenen Werkstücke vor der Ablage zu drehen. Somit kann eine Neuorientierung und/der Neuausrichtung erfolgen.

Die Förderstrecke kann eine erste Fördereinrichtung und/oder eine zweite Fördereinrichtung aufweisen, die benachbart zueinander angeordnet sind. Auf diese Weise kann die Flexibilität der Beschickungsstation erhöht werden.

Die Verpackungselemente, beispielsweise Kartons, können durch die erste Fördereinrichtung und/oder die zweite Fördereinrichtung synchron oder asynchron bewegt werden. Insbesondere können die erste Fördereinrichtung und die zweite Fördereinrichtung mit unterschiedlichen Geschwindigkeiten betrieben werden. Dies führt zu einer jeweils unterschiedlichen Paketleistung je Strang. Ferner können sich die Abmessungen der durch die erste Fördereinrichtung und die zweite Fördereinrichtung bewegten Verpackungselemente in Länge und Breite unterscheiden.

Im Fall einer ersten und zweiten Fördereinrichtung kann es vorgesehen sein, dass sich Abmessungen (insbesondere Länge und/oder Breite) der Verpackungselemente, die mit der ersten Fördereinrichtung und der zweiten Fördereinrichtung bewegt werden, voneinander unterscheiden, oder die Abmessungen können gleich oder ähnlich sein.

Gemäß einer Weiterbildung ist die erste Fördereinrichtung eingerichtet, ein erstes Verpackungselement zu fördern.

Zusätzlich oder alternativ kann die zweite Fördereinrichtung eingerichtet sein, ein zweites Verpackungselement zu fördern. Dies kann gegebenenfalls simultan erfolgen.

Die Einlegestation kann einen ersten Einlegeroboter, insbesondere für ein erstes Verpackungselement, und/oder einen zweiten Einlegeroboter, insbesondere für ein zweites Verpackungselement, aufweisen. Im Fall einer Förderstrecke mit einer ersten Fördereinrichtung und einer zweiten Fördereinrichtung hat es sich bewährt, den ersten Einlegeroboter und den zweiten Einlegeroboter bereitzustellen.

Dabei ist es bevorzugt, dass der erste Einlegeroboter und/oder der zweite Einlegeroboter als Gelenkarmroboter ausgebildet sind, um die Möglichkeiten der Handhabung der Verpackungselemente zu erhöhen.

Gemäß einer Ausführungsform ist es vorgesehen, dass der erste Einlegeroboter eine erste Greifeinrichtung und/oder der zweite Einlegeroboter eine zweite Greifeinrichtung aufweist, wobei die erste Greifeinrichtung und/oder die zweite Greifeinrichtung entsprechend einer Geschwindigkeit eines mittels der Förderstrecke bewegten Verpackungselements bewegt werden kann/können.

Der erste Einlegeroboter und/oder der zweite Einlegeroboter kann/können hängend an einem Rahmen der Einlegestation befestigt ist/sind. Somit wird eine besonders kompakte Bauweise ermöglicht. Ferner wird im Rahmen der Werkstück-Handhabung ein Ablegen des Werkstücks oder der Werkstücke unterhalb des ersten Einlegeroboters und/oder des zweiten Einlegeroboter ermöglicht.

Gemäß einem weiteren Aspekt wird ein Verfahren zum Beschicken eines Verpackungselements mit einem oder mehreren Werkstücken bereitgestellt, welches Verfahren die Schritte umfasst: Bereitstellen des einen Werkstücks oder der mehreren Werkstücke an einer Bereitstellungsstation, wobei die Bereitstellungsstation eine erste Bereitstellungseinrichtung und eine zweite Bereitstellungseinrichtung umfasst, Bewegen des einen Werkstücks oder der mehreren Werkstücke, Einlegen des einen Werkstücks oder der mehreren Werkstücke in ein zugeführtes Verpackungselement, wobei die erste Bereitstellungseinrichtung und die zweite Bereitstellungseinrichtung an einer Seite der Förderstrecke angeordnet sind.

Mit dem genannten Verfahren wird ein hoher Arbeitstakt ohne Stapelwechselzeit ermöglicht.

Es ist bevorzugt, dass die genannten Verfahrensschritte in der genannten Reihenfolge durchgeführt werden und/oder die Beschickungsstation gemäß einem der zuvor genannten Aspekte kann im Rahmen des Verfahrens eingesetzt werden.

Beim Bewegen mehrerer Werkstücke können die Werkstücke vor dem Einlegen vereinzelt werden. Insbesondere können die aneinander liegenden Werkstücke zunächst in einer ersten Richtung X vereinzelt und die Werkstücke insbesondere nachfolgend in einer zweiten Richtung Y gefördert werden.

Es ist bevorzugt, dass das Einlegen des Werkstücks oder der Werkstücke erfolgt, während das Verpackungselement bewegt wird. Auch können im Fall mehrerer Fördereinrichtungen mehrere Verpackungselemente bewegt werden. Gemäß einer weiteren Ausführungsform ist es vorgesehen, dass das Einlegen des Werkstücks oder der Werkstücke erfolgt, während ein ersten Verpackungselement und ein zweites Verpackungselement simultan nebeneinander liegend bewegt werden.

Es kann vorgesehen sein, dass sich Abmessungen (insbesondere Länge und/oder Breite) der Verpackungselemente (beispielsweise Kartons, insbesondere gefaltete Kartons), die mit der ersten Fördereinrichtung und der zweiten Fördereinrichtung bewegt werden, voneinander unterscheiden. Es können jedoch auch Verpackungselemente mit gleichen oder ähnlichen Abmessungen die mit der ersten Fördereinrichtung und der zweiten Fördereinrichtung bewegt werden.

Die Verpackungselemente, beispielsweise Kartons, können synchron oder asynchron bewegt werden. Insbesondere können die Verpackungselemente mit unterschiedlichen Geschwindigkeiten bewegt werden. Dies führt zu einer jeweils unterschiedlichen Paketleistung je Strang. Ferner können sich die Abmessungen der bewegten Verpackungselemente in Länge und Breite unterscheiden.

Es ist bevorzugt, dass das Werkstück plattenförmig ist (oder die Werkstücke plattenförmig sind) und/oder das Verpackungselement ein gefalteter Karton ist (oder die Verpackungselemente gefaltete Kartons sind).

Beim Bereitstellen des einen Werkstücks oder der mehreren Werkstücke kann das Werkstück oder können die Werkstücke vor der Ablage gedreht werden. Somit kann eine Neuorientierung und/der Neuausrichtung erfolgen.

### Kurze Beschreibung der Zeichnungen

Weitere Merkmale und Vorteile der Erfindung ergeben sich aus der nachfolgenden Beschreibung unter Bezugnahme auf die beiliegenden Zeichnungen.
- Fig. 1: ist eine Draufsicht auf eine Beschickungsstation gemäß einer Ausführungsform der Erfindung.
- Fig. 2: ist eine perspektivische Ansicht der in Fig. 1 dargestellten Beschickungsstation.
- Fig. 3: zeigt eine perspektivische Ansicht einer weiteren Ausführungsform einer Bereitstellungsstation.

### Beschreibung bevorzugter Ausführungsformen

Anhand der beigefügten Figuren wird eine bevorzugte Ausführungsform der Erfindung erläutert. In diesem Zusammenhang beschriebene Modifikationen bestimmter Merkmale können jeweils mit weiteren Merkmalen der Ausführungsform kombiniert werden, um weitere Ausführungsformen der Erfindung bereitzustellen.

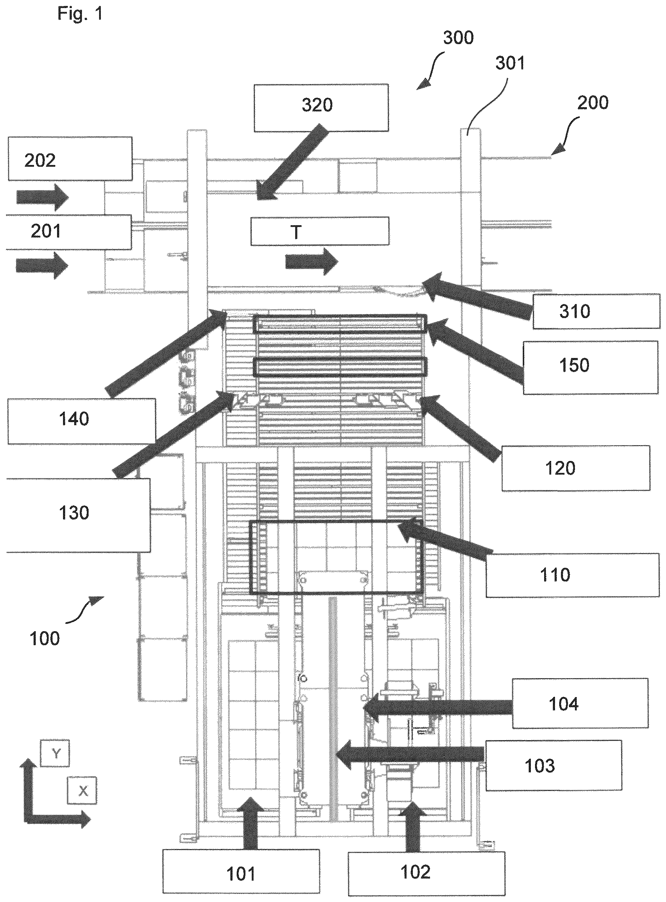

Fig. 1 ist eine Draufsicht einer Beschickungsstation gemäß einer Ausführungsform der Erfindung. Die Beschickungsstation ist eingerichtet, insbesondere plattenförmige Werkstücke in Verpackungselemente, insbesondere Kartonagen, einzulegen. Insbesondere kann es sich bei einem Verpackungselement um einen gefalteten Karton handeln, der beispielsweise zur Verpackung von Holzplatten/-brettern, Fußboden- oder Wandpaneelen oder von Möbelteilen verwendet wird.

Die Beschickungsstation umfasst eine Bereitstellungsstation 100, eine Förderstrecke 200 sowie eine Einlegestation 300. Die Förderrichtung T der Verpackungselemente entlang der Förderstrecke 200 ist im Wesentlichen senkrecht zur grundsätzlichen Bewegungsrichtung der Werkstücke bei der Bereitstellung in der Bereitstellungsstation 100.

Die Bereitstellungsstation 100 umfasst eine erste Bereitstellungseinrichtung 101 und eine zweite Bereitstellungseinrichtung 102, die benachbart zueinander angeordnet sind und zwischen deren Auflagebereichen ein Trennlineal 103 angeordnet ist. In vertikaler Richtung oberhalb des Trennlineals 103 ist ein Bereitstellungsroboter 104 angebracht, der sowohl Zugriff auf Werkstücke der ersten Bereitstellungseinrichtung 101 als auch auf Werkstücke der zweiten Bereitstellungseinrichtung 102 hat. Somit können anhand zweier Bereitstellungseinrichtungen 101, 102 Werkstücke für ein Einlegen in einem Verpackungselement bereitgestellt werden.

Die Anordnung der ersten Bereitstellungseinrichtung 101 und der zweiten Bereitstellungseinrichtung 102 an der gleichen Seite der Förderstrecke 200 führt zu einer kompakten Bauform der Beschickungsstation.

Die Bereitstellungsstation 100 umfasst eine Ablageeinrichtung 140, deren Ablagefläche zur Aufnahme eines oder mehrerer Werkstücke schräg zu einer horizontalen Richtung ausgerichtet ist und in Richtung der Förderstrecke 200 niedriger ist als benachbart zum Trennlineal 103. Die Ablageeinrichtung 140 ist gemäß der Ausführungsform als Rollenbahn ausgebildet.

An einem benachbart zum Trennlineal 103 vorgesehenen Bereich der Ablageeinrichtung 140 ist ein Ablagebereich 110 vorgesehen, in den der Bereitstellungsroboter 104, der gemäß der Ausführungsform Sauggreifer aufweist, die Werkstücke ablegt. Entsprechend der Neigung der Ablagefläche der Ablageeinrichtung 140 kann sich ein Werkstück (oder können sich mehrere Werkstücke) in Richtung der Förderstrecke 200 bewegen.

Ferner sind in vertikaler Richtung oberhalb der Ablageeinrichtung 140 eine erste Traversenstation 120 sowie eine zweite Traversenstation 130 vorgesehen. Mit der ersten Traversenstation 120 sowie der zweiten Traversenstation 130 können die Werkstücke vereinzelt werden.

An der Verknüpfungsstelle der Förderstrecke 200 und der Bereitstellungsstation 100 ist die Einlegestation 300 angeordnet. Die Einlegestation 300 umfasst einen Rahmen 301, der einen ersten Einlegeroboter 310 sowie einen zweiten Einlegeroboter 320 aufnimmt. Der erste Einlegeroboter 310 und der zweite Einlegeroboter 320 sind dabei hängend am Rahmen 301 der Einlegestation 300 befestigt, sodass entsprechend Zugriff auf die unterhalb verlaufende erste Fördereinrichtung 201 und zweite Fördereinrichtung 202 der Förderstrecke 200 gewährt wird.

Der erste Einlegeroboter 310 umfasst ein erstes Greifelement 311 und der zweite Einlegeroboter 320 umfasst ein zweites Greifelement 321. Mittels der Greifelemente 311, 321, die gemäß der Ausführungsform als Sauggreifer ausgebildet sind, können Werkstücke von der Ablageeinrichtung 140 aufgenommen und in ein mittels der ersten Fördereinrichtung 201 oder der zweiten Fördereinrichtung 202 der Förderstrecke 200 bewegten Verpackungselements eingebracht werden.

Die Förderstrecke 200 umfasst eine erste Fördereinrichtung 201 und eine zweite Fördereinrichtung 202, die benachbart und bevorzugt parallel zueinander angeordnet sind. Die Fördereinrichtungen sind im Ausführungsbeispiel als Bandförderer ausgebildet, wobei gemäß Modifikationen auch Riemenförderer oder Rollenförderer eingesetzt werden können. Es kann vorgesehen sein, dass sich Abmessungen (insbesondere Länge und/oder Breite) der Verpackungselemente, die mit der ersten Fördereinrichtung 201 und der zweiten Fördereinrichtung 202 bewegt werden, voneinander unterscheiden. Es können jedoch auch Verpackungselemente mit gleichen oder ähnlichen Abmessungen die mit der ersten Fördereinrichtung 201 und der zweiten Fördereinrichtung 202 bewegt werden.

Da die Einlegeroboter 310, 320 als Gelenkarmroboter ausgebildet sind, kann das jeweilige Greifelement in mehrere Raumrichtungen bewegt werden. Diese ermöglicht es, das jeweilige Greifelement entsprechend einer Bewegungsgeschwindigkeit eines mittels der ersten Fördereinrichtung 201 oder der zweiten Fördereinrichtung 202 bewegten Verpackungselements zu bewegen und hierbei eine Zustellbewegung durchzuführen, um das Werkstück oder die Werkstücke in das Verpackungselement einzulegen.

In der ersten Bereitstellungseinrichtung 101 und der zweiten Bereitstellungseinrichtung 102 werden plattenförmige Werkstücke als Lage mit n Teilen in Richtung einer Palettenbreite (X) und n Teilen in Richtung einer Palettenlänge (Y) bereitgestellt. Die Bereitstellung der Stapel der Werkstücke erfolgt von zwei Seiten. Die Werkstücke liegen dabei in der Lage rechtwinklig zur Einlegerichtung.

Der Beschickungsprozess beginnt in der ersten Bereitstellungseinrichtung 101 oder der zweiten Bereitstellungseinrichtung 102 und wechselt, sobald der Stapel in der jeweiligen Bereitstellungseinrichtung abgearbeitet ist.

Der Bereitstellungsroboter 104 versetzt die Teile als komplette Lage. Die Lage der Werkstücke wird beim Versetzen von einer Palette vor der Ablage auf dem Ablagebereich 110 gedreht, und zwar in Einlegerichtung. Die Ablageeinrichtung 140 vereinzelt die mehreren gemeinsam abgelegten Werkstücke und trennt die aneinander liegenden Werkstücke zunächst in Richtung X und fördert diese in Richtung Y.

Der Ablagebereich 110 ist durch die geneigte Ausgestaltung der Ablagefläche der Ablageeinrichtung 140 als schiefe Ebene ausgeführt und gleicht damit die Stapelhöhe zur Einlegehöhe aus. Die Werkstücke werden als Einzelteil oder spurenweise in der ausgerichteten Position im Ablagebereich 110 lagerichtig zum Einlegen vorgehalten. Je nach Teile- oder Spurengröße wählt die Steuerung eine passende Traversengröße, sodass im Bedarf ein Traversenwechsel durchgeführt wird.

Die Einlegestation 300 umfasst den ersten Einlegeroboter 310 und den zweiten Einlegeroboter 320. Wenn ein Werkstück zu einem Verpackungselement an der ersten Fördereinrichtung 201 zugeführt werden soll, saugt der erste Einlegeroboter 310 das Werkstück an und positioniert dieses oberhalb der ersten Fördereinrichtung 201. Die Greifeinrichtung 311 des ersten Einlegeroboters 310 synchronisiert sich auf die Bahngeschwindigkeit der Fördereinrichtung 201 auf und führt einen entsprechenden Einlegehub aus. Auf diese Weise wird das Werkstück (oder werden die Werkstücke) in das Verpackungselement eingebracht.

Entsprechendes kann mittels des zweiten Einlegeroboters 320 ausgeführt werden. Ferner kann der erste Einlegeroboter 310 ein Werkstück in ein Verpackungselement, welches mittels der zweiten Fördereinrichtung 202 bewegt wird, einlegen, oder der zweite Einlegeroboter 320 kann ein Werkstück in ein Verpackungselement einlegen, welches mittels der ersten Fördereinrichtung 201 bewegt wird.

Obwohl die Förderstrecke 200 gemäß der darstellten Ausführungsform eine erste Fördereinrichtung 310 und eine zweite Fördereinrichtung 320 umfasst, kann die Förderstrecke gemäß einer weiteren Ausführungsform auch lediglich eine Fördereinrichtung umfassen.

Es ist für den Fachmann ersichtlich, dass einzelne, jeweils in verschiedenen Ausführungsformen beschriebene Merkmale auch in einer einzigen Ausführungsform umgesetzt werden können, sofern sie nicht strukturell inkompatibel sind. Gleichermaßen können verschiedene Merkmale, die im Rahmen einer einzelnen Ausführungsform beschrieben sind, auch in mehreren Ausführungsformen einzeln oder in jeder geeigneten Unterkombination vorgesehen sein.

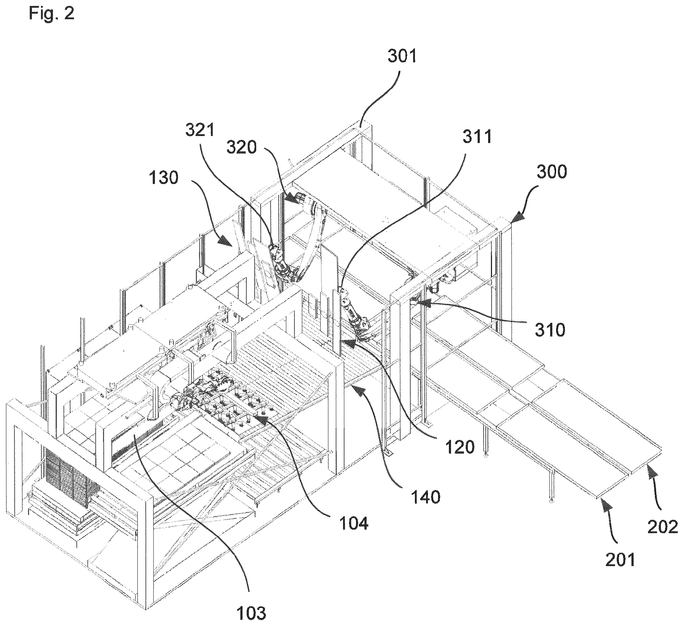

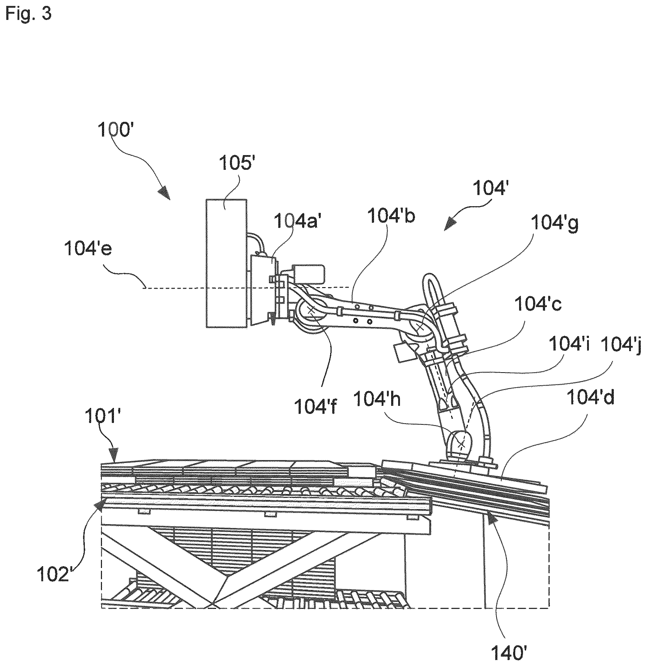

Fig. 3 zeigt eine perspektivische Ansicht eines weiteren Ausführungsbeispiels einer Beschickungsstation, wobei nur ein Ausschnitt der Beschickungsstation in Bezug auf eine von der Beschickungsstation umfasste Bereitstellungsstation 100' und eine von der Beschickungsstation umfasste Ablageeinrichtung 140' dargestellt ist. Mit Blick auf weitere Merkmale der Beschickungsstation wird auf die Ausführungen zu den Figuren 1-2 verwiesen.

Die Bereitstellungsstation 100' umfasst eine erste Bereitstellungseinrichtung 101', eine zweite Bereitstellungseinrichtung 102', die bevorzugt seitlich neben der ersten Bereitstellungseinrichtung 101' angeordnet ist und einen Bereitstellungsroboter 104'. Der Bereitstellungsroboter 104' ist bevorzugt wie in Fig. 3 gezeigt ein Knickarmroboter. Alternativ ist der Bereitstellungsroboter 104' beispielsweise ein Portalroboter, der quer zu einer Transportrichtung der Ablageeinrichtung 140' verfahrbar ist.

Der Bereitstellungsroboter 104' ist im Wesentlichen stationär insbesondere an einem Träger 105' der Beschickungsstation bevorzugt oberhalb der ersten Bereitstellungseinrichtung 101' und der zweiten Bereitstellungseinrichtung 102' angeordnet. Im Wesentlichen stationär bedeutet, dass eine Basis des Bereitstellungsroboters 104' an dem Träger 105' fixiert ist oder das die Basis mittels einer automatischen oder manuellen Translationseinrichtung an dem Träger 105' verschiebbar beispielsweise parallel zur Transportrichtung der Ablageeinrichtung 140' und/oder quer zur Transportrichtung der Ablageeinrichtung 140' angeordnet ist, wobei die Translationseinrichtung einen Translationsweg von wenigen Millimeter bis wenigen Zentimetern und insbesondere maximal 10 Zentimeter in der jeweiligen Richtung ermöglicht, insbesondere um eine Feinjustage der Position der Basis des Bereitstellungshandroboters 104' in Bezug auf die Bereitstellungseinrichtungen 101', 102' und die Ablageeinrichtung 140' vorzunehmen.

In Bezug auf die in Fig. 3 dargestellte Ausführungsform ist die Basis 104a' des dort gezeigten Knickarmroboters 104' beispielsweise an einer vertikal orientierten Seitenfläche des Trägers 105' hängend befestigt. Gemäß weiteren Modifikationen ist auch eine hängende Befestigung an einer horizontal orientierten Seitenfläche des Trägers 105' oder eine stehende Befestigung beispielsweise auf einem Podest der Bereitstellungsstation 100' denkbar.

Der Knickarmroboter 104' umfasst neben der Basis 104a' ferner einen ersten Knickarm 104b', einen zweiten Knickarm 104c' und eine Greifeinrichtung 104d' für die Werkstücke beispielsweise in Form mindestens eines Sauggreifers oder einer mechanischen Klemmeinrichtung.

Der Knickarmroboter 104' umfasst ferner eine erste Drehvorrichtung bevorzugt zwischen der Basis 104a' und dem ersten Knickarm 104b', wobei eine Drehachse 104e' der ersten Drehvorrichtung bevorzugt parallel zur Transportrichtung der Ablageeinrichtung 140' orientiert ist, damit die Greifeinrichtung 104d' bevorzugt abwechselnd Werkstücke von der der ersten Bereitstellungseinrichtung 101' und der zweiten Bereitstellungseinrichtung 102' aufnehmen kann.

Der Knickarmroboter 104' umfasst ferner eine zweite Drehvorrichtung zwischen der ersten Drehvorrichtung und dem ersten Knickarm 104b', wobei eine Drehachse 104f' der zweiten Drehvorrichtung bevorzugt quer zur Transportrichtung der Ablageeinrichtung 140' orientiert ist, damit der Knickarmroboter 104' aufgenommene Werkstücke bevorzugt in Richtung der Ablageeinrichtung 140' transportieren kann.

Der Knickarmroboter 104' umfasst ferner eine dritte Drehvorrichtung zwischen dem ersten Knickarm 104b' und dem zweiten Knickarm 104c', wobei eine Drehachse 104g' der dritten Drehvorrichtung bevorzugt quer zur Transportrichtung der Ablageeinrichtung 140' orientiert ist, damit der Knickarmroboter 104' die Werkstücke bevorzugt von einer der beiden Bereitstellungseinrichtungen 101', 102' anheben und aufgenommene Werkstücke auf der Ablageeinrichtung 140' bevorzugt geneigt ablegen und an die Ablageeinrichtung 140' übergeben kann.

Der Knickarmroboter 104' umfasst ferner eine vierte Drehvorrichtung zwischen der Greifeinrichtung 104d', wobei eine Drehachse 104h' der vierten Drehvorrichtung bevorzugt quer zur Transportrichtung der Ablageeinrichtung 140' orientiert ist, damit der Knickarmroboter 104' die Werkstücke bevorzugt von einer der beiden Bereitstellungseinrichtungen 101', 102' anheben und aufgenommene Werkstücke auf der Ablageeinrichtung 140' bevorzugt geneigt ablegen und an die Ablageeinrichtung 140' übergeben kann.

Ferner können bevorzugt eine Drehachse 104i' und/oder eine Drehachse 104j' mit einer jeweiligen Drehvorrichtung vorgesehen sein, um weitere Drehbewegungen der Ablageeinrichtung 140' zu ermöglichen. Eine Drehung um die Drehachse 104i' würde eine Ausrichtung der Ablageeinrichtung 140' während einer seitlichen Schwenkbewegung des Knickarmroboters 104' ermöglichen. Im Fall einer Drehachse 104j' kann die Ablageeinrichtung 140' verdreht werden. Somit kann die Flexibilität des Knickarmroboters 104' weiter gesteigert werden.

Zwischen den Bereitstellungseinrichtung 101', 102' ist bevorzugt ein Trennlineal zur Vereinzelung der Werkstücke angeordnet. Anstelle des Trennlineals können die Werkstücke alternativ auch dadurch vereinzelt werden, in dem eine planare Greifebene der Greifeinrichtung 104d' des Knickarmroboters vor dem Aufnehmen eines Werkstücks durch Nutzung mehrerer der Drehachsen 104e', 104f', 104g', 104h' gegenüber einer bevorzugt horizontalen Aufstellfläche der Beschickungsstation schräg gestellt wird. Die Greifebene wird beispielsweise durch nebeneinanderangeordnete Kontaktflächen der Sauggreifer, mit denen die Sauggreifer die Werkstücke kontaktieren können, gebildet. Durch die Neigung der Greifebene wird es ermöglicht, dass nur Sauggreifer in einem Endbereich der Greifeinrichtung 104d' Kontakt zu einer Oberseite eines Werkstücks aufnehmen, das Werkstück ansaugen und das Werkstück durch die gekippte Stellung der Greifeinrichtung 104d' von den übrigen auf einer der Bereitstellungseinrichtungen 101', 102' vorhandenen Werkstücken vereinzeln können.

An einem oberen Bereich der geneigten Ablageeinrichtung 140' ist ähnlich wie in der ersten Ausführungsform ein gegenüber der Horizontalen geneigter Ablagebereich vorgesehen, in den die Bereitstellungshandhabungseinrichtung 104' die Werkstücke mittels der Greifeinrichtung 104d' ablegen kann.

Aufgrund der Neigung der Ablagefläche der Ablageeinrichtung 140' und der Erdanziehungskraft kann sich ein Werkstück (oder können sich mehrere Werkstücke) bevorzugt eigenständig in Richtung der Förderstrecke 200 (siehe erste Ausführungsform) bewegen.

## Patentansprüche

1. Beschickungsstation, umfassend:
eine Bereitstellungsstation (100, 100'), umfassend eine erste Bereitstellungseinrichtung (101) und eine zweite Bereitstellungseinrichtung (102, 102'), die benachbart zueinander angeordnet sind und eingerichtet sind, Werkstücke bereitzustellen,
eine Förderstrecke (200) zum Zuführen eines Verpackungselements,
eine Einlegestation (300), die eingerichtet ist, ein mittels der Bereitstellungsstation (100, 100') bereitgestelltes Werkstück in das zugeführte Verpackungselement einzubringen,
**dadurch gekennzeichnet, dass**
die erste Bereitstellungseinrichtung (101, 101') und die zweite Bereitstellungseinrichtung (102, 102') an einer Seite der Förderstrecke (200) angeordnet sind.

2. Beschickungsstation gemäß Anspruch 1, wobei die Bereitstellungsstation (100, 100') eine Ablageeinrichtung (140, 140') zwischen der ersten Bereitstellungseinrichtung (101, 101') und der zweiten Bereitstellungseinrichtung (102, 102') sowie der Förderstrecke (200) aufweist, wobei die Ablageeinrichtung (140, 140') eingerichtet ist, in Richtung der Förderstrecke (200) insbesondere die Werkstücke zu bewegen und bevorzugt die Werkstücke zu vereinzeln.

3. Beschickungsstation gemäß Anspruch 2, wobei die Ablageeinrichtung (140, 140') eine geneigte Ablagefläche zur Aufnahme eines oder mehrerer Werkstücke aufweist.

4. Beschickungsstation gemäß einem der vorangegangenen Ansprüche, wobei sich die Bereitstellungsstation (100, 100') ausgehend von der Förderstrecke (200) erstreckt.

5. Beschickungsstation gemäß einem der vorangegangenen Ansprüche, wobei zwischen der ersten Bereitstellungseinrichtung (101, 101') und der zweiten Bereitstellungseinrichtung (102, 102') ein Trennlineal angeordnet ist.

6. Beschickungsstation gemäß einem der vorangegangenen Ansprüche, wobei die Bereitstellungsstation (100) einen Bereitstellungsroboter (104, 104') umfasst, der eingerichtet ist, ein oder mehrere an der ersten Bereitstellungseinrichtung (101, 101') oder der zweiten Bereitstellungseinrichtung (102, 102') bereitgestellte Werkstücke in Richtung der Förderstrecke zu bewegen,
wobei bevorzugt ist, dass der Bereitstellungsroboter (104, 104') eingerichtet ist, das aufgenommene oder die aufgenommenen Werkstücke vor der Ablage zu drehen.

7. Beschickungsstation nach Anspruch 6, wobei eine Basis des Bereitstellungsroboters (104, 104') in Richtung der Förderstrecke (200) bewegbar oder im Wesentlichen stationär ist und wobei insbesondere der Bereitstellungsroboters (104, 104') hängend an der Bereitstellungsstation (100, 100') oder der Beschickungsstation, insbesondere an einem Träger (105') der Bereitstellungsstation (100, 100') oder der Beschickungsstation befestigt ist.

8. Beschickungsstation gemäß einem der vorangegangenen Ansprüche, wobei die Förderstrecke (200) eine erste Fördereinrichtung (201) und/oder eine zweite Fördereinrichtung (202), die benachbart zueinander angeordnet sind,
wobei die erste Fördereinrichtung (201) bevorzugt eingerichtet ist, ein erstes Verpackungselement zu fördern und/oder die zweite Fördereinrichtung (202) bevorzugt eingerichtet ist, insbesondere simultan, ein zweites Verpackungselement zu fördern.

9. Beschickungsstation gemäß einem der vorangegangenen Ansprüche, wobei die Einlegestation (300) einen ersten Einlegeroboter (310), insbesondere für ein erstes Verpackungselement, und/oder einen zweiten Einlegeroboter (320), insbesondere für ein zweites Verpackungselement, aufweist, wobei bevorzugt ist, dass der erste Einlegeroboter (310) und/oder der zweite Einlegeroboter (320) als Gelenkarmroboter ausgebildet sind.

10. Beschickungsstation gemäß Anspruch 9, wobei der erste Einlegeroboter (310) eine erste Greifeinrichtung (311) und/oder der zweite Einlegeroboter (320) eine zweite Greifeinrichtung (321) aufweist, wobei die erste Greifeinrichtung (311) und/oder die zweite Greifeinrichtung (321) entsprechend einer Geschwindigkeit eines mittels der Förderstrecke (200) bewegten Verpackungselements bewegt werden kann/können.

11. Beschickungsstation gemäß Anspruch 9 oder 10, wobei der erste Einlegeroboter (310) und/oder der zweite Einlegeroboter (320) hängend an einem Rahmen (301) der Einlegestation (300) befestigt ist/sind.

12. Verfahren zum Beschicken eines Verpackungselements, insbesondere eines gefalteten Kartons, mit einem oder mehreren insbesondere plattenförmigen Werkstücken, umfassend die Schritte:
Bereitstellen des einen Werkstücks oder der mehreren Werkstücke an einer Bereitstellungsstation (100, 100'), wobei die Bereitstellungsstation (100, 100') eine erste Bereitstellungseinrichtung (101, 101') und eine zweite Bereitstellungseinrichtung (102, 102') umfasst,
Bewegen des einen Werkstücks oder der mehreren Werkstücke,
Einlegen des einen Werkstücks oder der mehreren Werkstücke in ein zugeführtes Verpackungselement,
wobei die erste Bereitstellungseinrichtung (101, 101') und die zweite Bereitstellungseinrichtung (102, 102') an einer Seite der Förderstrecke (200) angeordnet sind.

13. Verfahren gemäß Anspruch 12, wobei, beim Bewegen mehrerer Werkstücke, die Werkstücke vor dem Einlegen vereinzelt werden.

14. Verfahren gemäß Anspruch 12 oder 13, wobei das Einlegen des Werkstücks oder der Werkstücke erfolgt, während das Verpackungselement bewegt wird oder während ein ersten Verpackungselement und ein zweites Verpackungselement simultan nebeneinander liegend bewegt werden.

15. Verfahren gemäß einem der Ansprüche 12-14, wobei beim Bereitstellen des einen Werkstücks oder der mehreren Werkstücke das Werkstück oder die Werkstücke vor der Ablage gedreht werden.
